# EUROPEAN PATENT APPLICATION

(11) **EP 3 093 837 A1**
(43) Date of publication of application: **16.11.2016**
(21) Application number: 14878235.2
(22) Date of filing: 12.12.2014
(51) Int. Cl.: G09G 3/34, B60K 35/00, G09G 3/20

(54) **LIGHT SOURCE DRIVING DEVICE AND DISPLAY DEVICE**

(30) Priority: 10.01.2014 JP 2014002797
(71) Applicant: Nippon Seiki Co., Ltd., Nagaoka-shi, Niigata 940-8580 (JP)
(72) Inventor: KURAISHI,Tomoya, Nagaoka Niigata (JP); HADA,Makoto, Nagaoka, Niigata (JP)
(74) Representative: Carpmaels & Ransford LLP
(86) International application number: PCT/JP2014/082917
(87) International publication number: WO 2015/104948

(57) **Abstract**

In the present invention, it is possible to precisely adjust the intensity of light emitted from a light source and ensure a dynamic range from high brightness to low brightness even in a field-sequential color drive format for turning light on and off at high speed. A light intensity detection signal (SFB) indicative of the intensity of light emitted by a light source (11) is acquired, and on the basis of the light intensity detection signal (SFB) and a set reference signal (SA), a comparison circuit (410) generates a comparison signal (SB) indicative of turning ON and OFF. Within a sub-frame period, a logic circuit (420) repeats turning ON/OFF based on a pulse signal inputted from the comparison circuit (410), and outputs a lighting signal (SD1) for causing the light source (11) to emit light in accordance with the reference signal (SA) which is a set value, and outputs a non-lighting signal (SD2) for causing the light source (11) to not emit light in accordance with a set value.

## Description

### Technical Field

The disclosure relates to a display device, and more particularly, to a display device configured to display an image by a field-sequential color format and a light source driving device to be used for the same.

### Background Art

A display device disclosed in PTL 1 is configured to display an image by a field-sequential color format (hereinafter, referred to as FSC format), and to use a DMD (registered trademark; Digital Micro-mirror Device), which is a reflection-type display element. The corresponding display device is configured to reflect light emitted by a light source on the basis of an external image signal by respective mirrors of the DMD, thereby implementing a high-definition display.

According to the display device using the FSC format, since it is necessary to illuminate much light to the display element in a short time, the display brightness cannot be secured unless a high-output light source (for example, an LED of which maximum rated current is several amperes) is used. However, when the high-output light source is used, the lowest current at which the light emission is secured also increases. For this reason, it is difficult to implement the stable low brightness display, and it is not possible to secure a dynamic range from high brightness to extremely low brightness.

In order to solve the above problem, the applicant filed as Japanese Patent Application No. 2012-284087 in which triangular-wave current is supplied to a light source by using a shunt circuit, so that an amount of light to be emitted from a light source is suppressed low even though the light source is a high-output light source. The disclosed technology is described as follows.

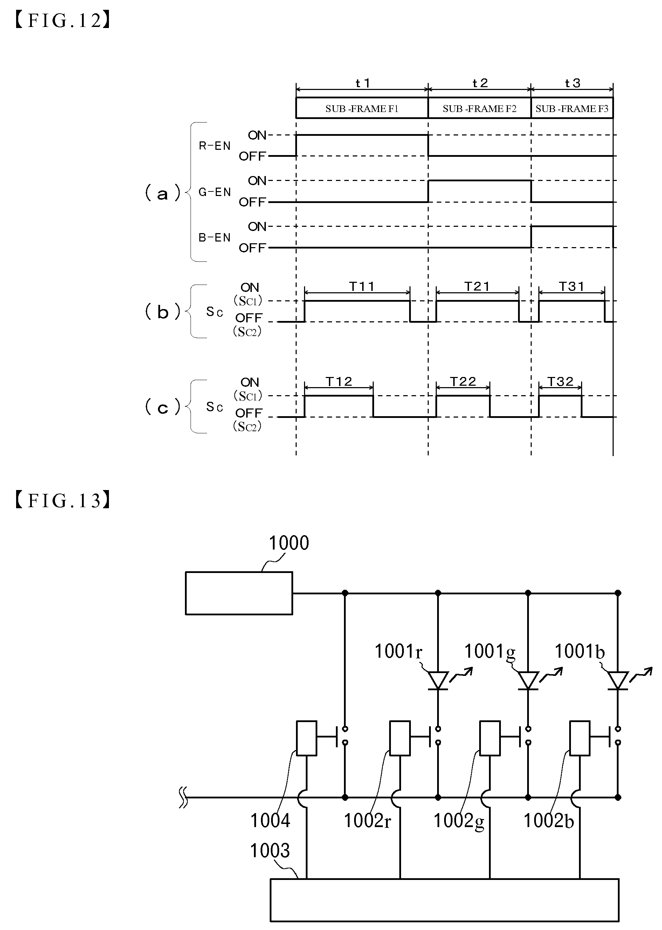

FIG. 13 depicts a driving circuit of a red light source 1001r, a green light source 1001g and a blue light source 1001b. The respective light sources are connected to a power feeding unit 1000, and switch units 1002r, 1002g, 1002b are driven under control of a control unit 10003, so that current is supplied from the power feeding unit 1000 to a selected light source and the light source is turned on. The driving circuit has also a switching unit 1004 connected in parallel with each light source with respect to the power feeding unit 1000. The switching unit 1004 is turned on and off at high speed, so that the current to be supplied to the light source is configured as a plurality of triangular waves. Thereby, the current flowing through the light source is reduced, so that an amount of light to be emitted by the light source is suppressed low and a dynamic range is secured.

### Citation List

### Patent Literature

PTL 1: JP-A-2002-251163

### Summary of Invention

### Technical Problem

According to the above circuit, however, the switching unit 1004 may be applied with high load due to switching by a short pulse signal and direct flowing of large current to a ground GND.

It is therefore an object of the disclosure to provide a light source driving device and a display device capable of precisely adjusting an intensity of light to be emitted from a light source and securing a dynamic range from high brightness to low brightness even in a field-sequential color drive format for turning light on and off at high speed.

### Solution to Problem

In order to achieve the above object, a light source driving device of the disclosure includes a control signal output unit configured to acquire a light intensity indicative of an intensity of light emitted by a light source, to generate a pulse signal indicative of ON and OFF states on the basis of the light intensity and a set setting value and to output the same as a driving signal, and a driving unit that drives the light source when the driving signal output from the control signal output unit indicates any one of ON and OFF states. The light source is configured to emit light of a different color every predetermined sub-frame, and the control signal output unit is configured to output a lighting signal repeating ON and OFF states based on the pulse signal and for causing the light source to emit the light in correspondence to the setting value and a non-lighting signal for causing the light source not to emit the light in correspondence to the setting value to the driving unit, as the driving signal, within the sub-frame period, and to output the lighting signal in a driving period preset for each sub-frame.

In addition, a light source driving device of the disclosure includes a control signal output unit configured to acquire driving current of a light source, to generate a pulse signal indicative of ON and OFF states on the basis of a value based on the driving current and a set setting value and to output the same as a driving signal, and a driving unit that drives the light source when the driving signal output from the control signal output unit indicates any one of ON and OFF states. The light source is configured to emit light of a different color every predetermined sub-frame, and the control signal output unit is configured to output a lighting signal repeating ON and OFF states based on the pulse signal and for causing the light source to emit the light in correspondence to the setting value and a non-lighting signal for causing the light source not to emit the light in correspondence to the setting value to the driving unit, as the driving signal, within the sub-frame period, and to output the lighting signal in a driving period preset for each sub-frame.

In addition, a light source driving device of the disclosure includes a control signal output unit configured to acquire a light intensity indicative of an intensity of light emitted by a light source, to generate a pulse signal indicative of ON and OFF states on the basis of the light intensity and a set setting value and to output the same as a driving signal, and a driving unit that drives the light source when the driving signal output from the control signal output unit indicates any one of ON and OFF states. The light source is configured to emit light of a different color every predetermined sub-frame, and the control signal output unit is configured to output a lighting signal repeating ON and OFF states based on the pulse signal and for causing the light source to emit the light in correspondence to the setting value and a non-lighting signal for causing the light source not to emit the light in correspondence to the setting value to the driving unit, as the driving signal, within the sub-frame period, and to output the lighting signal by the number of pulses preset for each sub-frame.

In addition, a light source driving device of the disclosure includes a control signal output unit configured to acquire driving current of a light source, to generate a pulse signal indicative of ON and OFF states on the basis of a value based on the driving current and a set setting value and to output the same as a driving signal, and a driving unit that drives the light source when the driving signal output from the control signal output unit indicates any one of ON and OFF states. The light source is configured to emit light of a different color every predetermined sub-frame, and the control signal output unit is configured to output a lighting signal repeating ON and OFF states based on the pulse signal and for causing the light source to emit the light in correspondence to the setting value and a non-lighting signal for causing the light source not to emit the light in correspondence to the setting value to the driving unit, as the driving signal, within the sub-frame period, and to output the lighting signal by the number of pulses preset for each sub-frame.

In addition, a display device of the disclosure includes a light source driving device, a light source configured to emit light by the light source driving device, and a display element configured to modulate the light emitted from the light source, thereby generating an image.

### Advantageous Effects of Invention

According to the disclosure, it is possible to precisely adjust the intensity of light to be emitted from the light source and to secure a dynamic range from high brightness to low brightness even in a field-sequential color drive format for turning light on and off at high speed.

### Brief Description of Drawings

FIG. 1 depicts an aspect where an HUD device according to an embodiment of the disclosure is mounted on a vehicle.
FIG. 2 is a schematic configuration view depicting a configuration of the HUD device according to the embodiment.
FIG. 3 is a schematic configuration view depicting a configuration of an illumination device according to the embodiment.
FIG. 4 is a block diagram depicting an electrical configuration of a light source driving device according to the embodiment.
FIG. 5 is a block diagram depicting an electrical configuration of a logic circuit according to the embodiment.
FIG. 6(a) to FIG. 6(f) are timing charts depicting a variety of signals and driving currents in first sub-frame processing.
FIG. 7(a) to FIG. 7(f) are timing charts depicting a variety of signals and driving currents in second sub-frame processing.
FIG. 8 is a flow chart depicting operations in the embodiment.
FIG. 9 is a flow chart depicting the sub-frame processing in the embodiment.
FIG. 10 is a block diagram depicting an electrical configuration of a light source driving device according to a second embodiment.
FIG. 11(a) to FIG. 11(f) are timing charts depicting a variety of signals and driving currents in second sub-frame processing according to a third embodiment.
FIG. 12(a) to FIG. 12(c) are timing charts depicting changes in limit signal in a fourth embodiment.
FIG. 13 depicts an electrical configuration of a light source driving device of the related art.

### Description of Embodiments

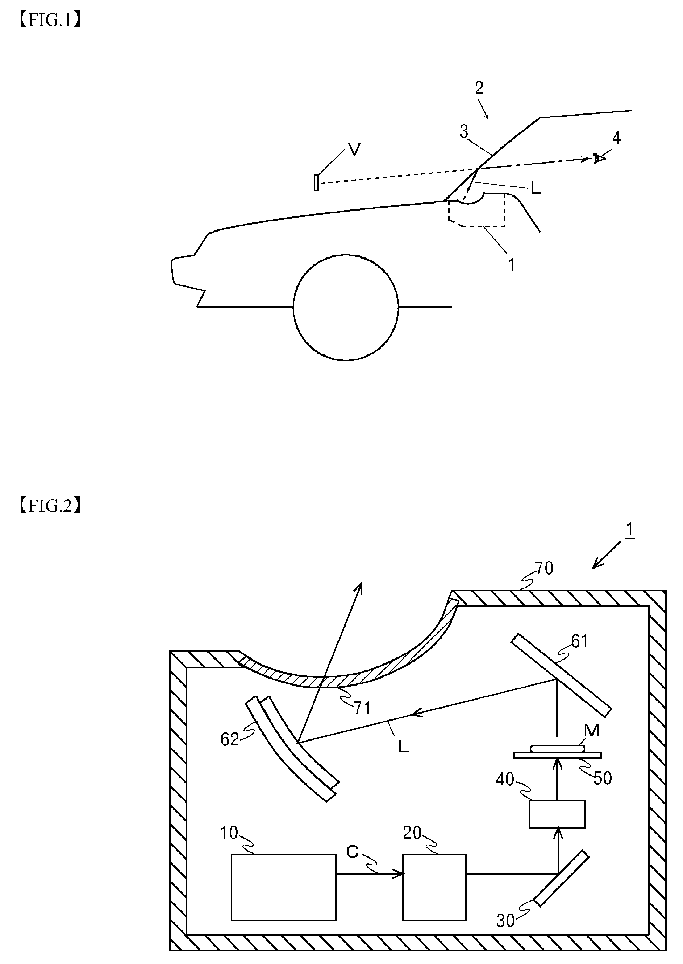

A display device according to an embodiment of the disclosure is a head up display device (hereinafter, referred to as HUD device) 1 shown in FIG. 1. As shown, the HUD device 1 is disposed in a dashboard of a vehicle 2, and is configured to emit display light L indicative of a generated image M (refer to FIG. 2) towards a wind shield 3. The display light L reflected on the wind shield 3 is visibly recognized as a virtual image V of the image formed at the front of the wind shield 3 by an observer 4 (mainly, a driver of the vehicle 2). In this way, the HUD device 1 is configured to enable the observer 4 to visibly recognize the image M as the virtual image V. The image M is to notify information relating to the vehicle 2 (for example, the number of engine revolutions, navigation information and the like).

As shown in FIG. 2, the HUD device 1 includes an illumination device 10, an illumination optical system 20, a display element 30, a projection optical system 40, a screen 50, a plane mirror 61, a concave mirror 62, a housing 70, and a light transmission part 71.

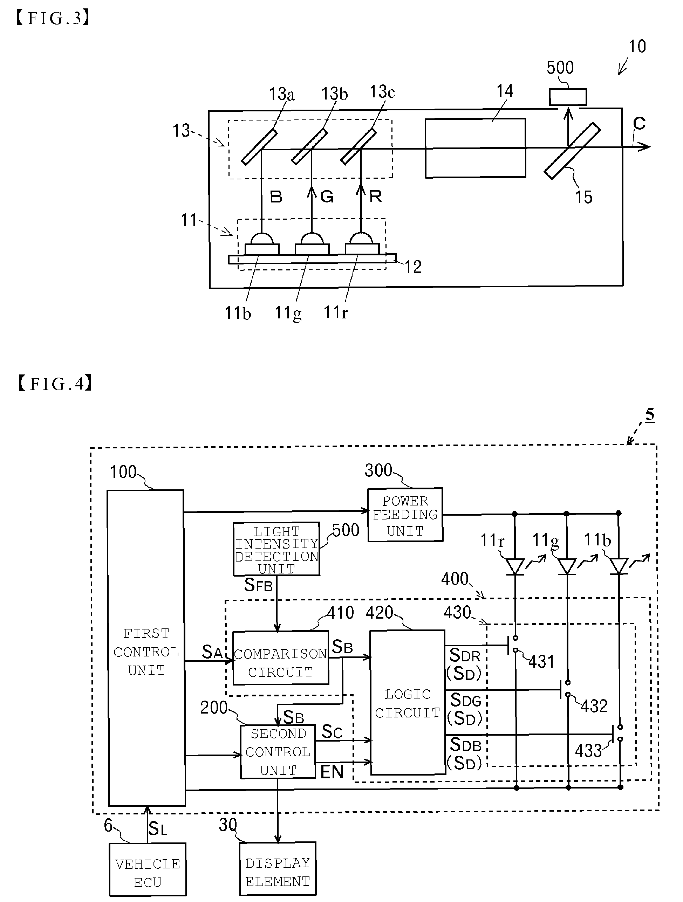

In addition, as shown in FIG. 4, the HUD device 1 (the illumination device 10) includes a first control unit 100, a second control unit 200, a power feeding unit 300, a light source driving unit 400 and a light intensity detection unit 500.

The illumination device 10 is configured to emit lights RGB (illumination light C) (which will be described later) towards the illumination optical system 20, and includes a light source 11, a circuit substrate 12, a multiplexing unit 13, a brightness unevenness reduction unit 14 and a translucent film 15, as shown in FIG. 3.

The light source 11 is configured by light sources 11r, 11g, 11b consisting of light emitting diodes (LED). The light source 11r is configured to emit red light R, the light source 11g is configured to emit green light G, and the light source 11b is configured to emit blue light B. Each of the light sources 11r, 11g, 11b is configured to be driven by a light source driving device 5 (which will be described later) and to emit light at predetermined light intensity and timing. In this embodiment, the light sources 11r, 11g, 11b are configured as independent light sources 11. However, lights of a plurality of colors may be emitted from the common light source 11. In addition, any light source 11 may be adopted inasmuch as it is configured to emit lights of a plurality of colors, and the light source 11 may be configured to emit lights of only two colors or four colors (including white) or more.

The circuit substrate 12 is a printed circuit board. The circuit substrate 12 is mounted thereon with the light sources 11r, 11g, 11b.

The multiplexing unit 13 is configured to emit the lights R, G, B emitted from the light sources 11r, 11g, 11b towards a substantial one direction (the brightness unevenness reduction unit 14-side). Specifically, the multiplexing unit 13 has a reflection part 13a consisting of a reflection mirror and multiplexing parts 13b and 13c consisting of dichroic mirrors configured to reflect light having a specific wavelength but to cause light having other wavelength to penetrate therethrough.

The reflection part 13a is positioned at an emission side of the light source 11b. The reflection part 13a is configured to reflect the incident blue light B towards the multiplexing part 13b.

The multiplexing part 13b is positioned at an emission side of the light source 11g. The multiplexing part 13b is configured to reflect the incident green light G towards the multiplexing part 13c and to cause the blue light B from the reflection part 13a to penetrate therethrough, as it is. The multiplexing part 13c is positioned at an emission side of the light source 11r. The multiplexing part 13c is configured to reflect the incident red light R towards the illumination optical system 20 and to cause the light B or the light G from the multiplexing part 13b to penetrate therethrough, as it is. That is, the illumination light C (the blue light B, the green light G or the red light R) sequentially emitted from the light source 11 is emitted in a substantial one direction (the brightness unevenness reduction unit 14-side) from the multiplexing part 13c. That is, the multiplexing unit 13 is to combine optical axes of the light sources 11r, 11g, 11b and may be omitted when lights of a plurality of colors are to be emitted from one light source 11.

The brightness unevenness reduction unit 14 includes a mirror box, an array lens and the like, and is configured to diffusely reflect, to scatter and to refract the illumination light C from the multiplexing unit 13, thereby reducing unevenness of the light.

The illumination device 10 is configured to emit the light emitted from the light source 11 towards the illumination optical system 20 as the illumination light C (the blue light B, the green light G or the red light R) via the multiplexing unit 13 and the brightness unevenness reduction unit 14 (further, the translucent film 15 to be described below).

The translucent film 15 consists of a translucent member having reflectivity of about 5%, and is configured to cause most of the illumination light C having reached via the brightness unevenness reduction unit 14 to penetrate therethrough but to reflect a part of the illumination light towards the light intensity detection unit 500.

The light intensity detection unit 500 is configured by a light receiving element having a photodiode, for example, and is provided at a position at which the illumination light C reflected on the translucent film 15 is to be received. The light intensity detection unit 500 is configured to receive a part of the illumination light C and to detect the light intensity of each of the lights R, G, B in a time division manner. The light intensity detection unit 20 has only to be configured to detect the light intensity of each of the lights R, G, B. Therefore, the light intensity detection unit may be provided at a place at which it is possible to detect the light intensity of each of the lights R, G, B before the multiplexing, for example, rather than on a light path of the illumination light C. Also, the light intensity detection unit 20 may be appropriately provided at a place at which it is possible to detect the light intensity of a part of the illumination light C emitted from the illumination optical system 30. The functions of the light intensity detection unit 20 will be described in detail later.

The illumination optical system 20 includes a concave lens and the like, and is configured to adjust the illumination light C emitted from the illumination device 10 to a size corresponding to the display element 30.

The display element 30 consists of a DMD having a plurality of moveable micro mirrors and is configured to appropriately reflect the illumination light C emitted from the illumination optical system 20 as each mirror is controlled to any one of ON and OFF states. By reflecting the illumination light C in this way, the display element 30 is configured to project the image M (light for generating the image M) towards the projection optical system 40.

Specifically, the micro mirror is provided on its lower part with an electrode. Each mirror is driven with a very short period (for example, order of µsec) by the electrode, so that each mirror becomes an ON or OFF state. Each mirror can be moved about a hinge serving as a support point. When the mirror is at the ON state, a mirror surface is inclined by +12° about the hinge serving as a support point, and when the mirror is at the OFF state, a mirror surface is inclined by -12 about the hinge serving as a support point. The mirror under ON state is configured to reflect the illumination light C from the illumination optical system 20 towards the projection optical system 40, and the mirror under OFF state is configured not to reflect the illumination light C towards the projection optical system 40. The display element 30 is configured to individually drive the respective mirrors, thereby projecting the image M towards the projection optical system 60.

The projection optical system 40 includes a concave or convex lens and the like, and is an optical system for efficiently projecting the display light L from the display element 30 to the screen 50.

The screen 50 includes a holographic diffuser, a micro lens array, a diffusion plate and the like, and is configured to receive the display light L from the projection optical system 40 on a backside (a lower surface in FIG. 2) and to display the image M on a front surface (an upper surface in FIG. 2).

The plane mirror 61 is configured to reflect the display light L indicative of the image M displayed on the screen 50 towards the concave mirror 62.

The concave mirror 62 is configured to reflect the display light L having reached from the plane mirror 61 on a concave surface, thereby emitting the reflected light towards the wind shield 3. Thereby, the virtual image V to be imaged becomes larger than the image M displayed on the screen 50. The display light L reflected on the concave mirror 62 reaches the wind shield 3 via the light transmission part 71.

The housing 70 is configured to accommodate the illumination device 10, the illumination optical system 20, the display element 30, the projection optical system 40, the screen 50, the plane mirror 61, the concave mirror 62 and the like at predetermined positions. The housing 70 is formed by a light-blocking member, for example.

The light transmission part 71 is made of translucent resin such as acryl, and is configured to penetrate the display light L from the concave mirror 62 therethrough. The light transmission part 71 is fitted to the housing 70, for example. The light transmission part 71 has a bent shape so that the external light having reached is not reflected towards the observer 4.

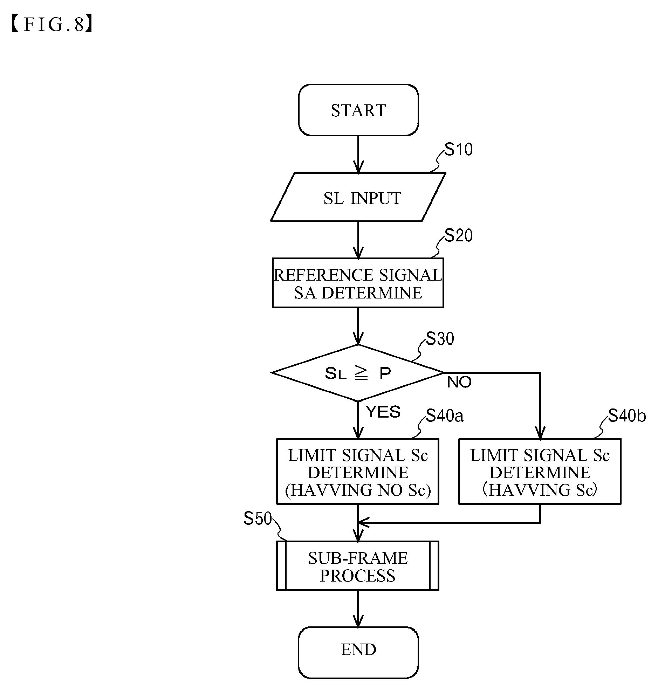

In the below, the light source driving device 5 according to this embodiment will be described in detail with reference to FIG. 4 to FIG. 9.

### (Light Source Driving Device)

As shown in FIG. 4, the light source driving device 5 includes a first control unit 100, a second control unit 200, a power feeding unit 300, a light source driving unit 400 and a light intensity detection unit 500. These units are mounted or formed on a printed circuit board (not shown) except for the circuit substrate 12 disposed in the housing 70. In the meantime, all or some of the first control unit 100, the second control unit 200, the power feeding unit 300 and the light source driving unit 400 may be mounted on the circuit substrate 12.

The first control unit 100 is configured by a micro controller, and includes a CPU, a memory (RAM, ROM) and the like. The CPU is configured to read out and execute a program stored in advance in the ROM and necessary for operations of the HUD device 1, thereby controlling the respective units. The first control unit 100 is input with an image signal for displaying the image M from a vehicle ECU (Electronic Control Unit) 6 of the vehicle 2 through LVDS (Low Voltage Differential Signal) communication or the like and an external illuminance signal (dimming signal) SL of a surrounding of the vehicle 2 from the vehicle ECU 6, and is configured to adjust a luminescence intensity of the light source 11 on the basis of the same and to display the desired display image M on the display element 30 via the second control unit 200. The image signal to be output from the first control unit 100 is input to the second control unit 200 via an image processing IC (not shown) and the like.

In addition, the image signal from the vehicle ECU 6 may be directly input to the second control unit 200 (which will be described later) via the image processing IC (not shown) and the like without via the first control unit 100.

The first control unit 100 is configured to control the respective units so as to control the light source 11, as follows.
(1) The first control unit 100 is configured to output a reference signal SA to one input terminal of a comparison circuit 410. The reference signal SA is indicative of a setting value of the light source 11, and is generated on the basis of the external illuminance signal (dimming signal) SL input from the vehicle ECU 6 to the first control unit 100. Specifically, for example, the first control unit 100 is configured to refer to table data, in which an intensity value indicated by the external illuminance signal SL and a setting value are associated, from the memory, and to output a pulse signal of a duty ratio of a setting value corresponding to an intensity value indicated by the acquired external illuminance signal SL. The pulse signal is converted into an analog signal by an analog converter configured by an integration circuit (not shown), and the analog signal is output as the reference signal SA to the comparison circuit 410. A frequency of the pulse signal for generating the reference signal SA to be output from the first control unit 100 is preferably 30 kHz or higher.
   A magnitude of the value of the reference signal SA associated with the external illuminance signal SL is different for each color of the light emitted from the light source 11. Therefore, a magnitude of the reference signal SA that is to be output to the comparison circuit 410 by the first control unit 100 is also different for each sub-frame within which light of a different color is to be output. By this configuration, even when a light intensity detection signal SFB of the light of each color is processed with the common comparison circuit 410, it is possible to appropriately determine and adjust an amount of the light of each color emitted by the light source 11.
(2) The first control unit 100 is configured to output a limit signal SC to an input terminal of a logic circuit 420 via the second control unit 200. The limit signal SC is configured by a permission signal SC1 for outputting a driving signal SD (a lighting signal SD1 to be described later) corresponding to a comparison signal SB to the logic circuit 420 only for a predetermined period or a prohibition signal SC2 for outputting a driving signal SD (a non-lighting signal SD2 to be described later) to the logic circuit 420 irrespective of the comparison signal SB, with respect to the comparison signal SB to be input from the comparison circuit 410. The first control unit 100 is configured to determine whether the external illuminance signal SL input from the vehicle ECU 6 is less than a threshold value P. When the external illuminance signal SL is less than the threshold value P, the first control unit 100 outputs the limit signal SC consisting of the permission signal SC1 and prohibition signal SC2 to the second control unit 200, and when the external illuminance signal SL is equal to or greater than the threshold value P, the first control unit 100 outputs the limit signal SC consisting of the permission signal SC1 to the second control unit 200.
(3) In addition, the first control unit 100 is configured to control the power feeding unit 300 to set a voltage to be applied to the light source 11.
(4) In addition, the first control unit 100 is configured to output a gain, which is preset in correspondence to the external illuminance signal SL to be input from the vehicle ECU 6, to an amplification circuit (not shown) provided between the light intensity detection unit 500 and the comparison circuit 410.

The second control unit 200 is an LSI (Large Scale Integration) configured to implement a desired function by hardware, and is configured by an ASIC (Application Specific Integrated circuit), an FPGA (Field Programmable Gate Array) or the like. In addition, the second control unit 200 is connected with the memory (not shown), in which data for outputting the limit signal SC corresponding to a signal from the first control unit 100, data for controlling an enable signal EN (R-EN, G-EN, B-EN) for controlling a light emitting timing of the light source 11 in correspondence to illumination control data from the first control unit 100, and data for controlling the display element 30 in correspondence to the display control data from the first control unit 100 are stored.

The power feeding unit 300 is configured by a power supply IC (Integrated Circuit), a switching circuit using a transistor, and the like. The power feeding unit 300 is configured to lower power from a battery (not shown) of the vehicle 2 and to apply a voltage having an appropriate value to the light source 11 under control of the first control unit 100. As shown in FIG. 4, the power feeding unit 300 is connected to anode-sides of the light sources 11r, 11g, 11b. In this way, the common supply voltage line is provided for the anode-sides of the LEDs of respective colors, so that it is possible to reduce the number of components such as the power feeding unit 110 and the number of wirings. In the meantime, the power feeding unit 300 may be integrally incorporated in an LSI of the light source driving unit 400 (which will be described later).

The light source driving unit 400 is an LSI configured to implement a desired function by hardware, and is configured by an ASIC and an FPGA independent of the second control unit 200, for example. The light source driving unit 400 has the comparison circuit 410, the logic circuit 420 and a switch unit 430, and is configured to input from the light intensity detection unit 500 the light intensity detection signal SFB based on the light intensity of the illumination light C (the blue light B, the green light G or the red light R) emitted by the light source 11, to generate the driving signal SD for driving the light source 11 from the light intensity detection signal SFB, and to turn on/off the switch unit 430 on the basis of the driving signal SD, thereby turning on/off the light source 11.

The comparison circuit 410 is configured by a comparator, and is configured to compare the light intensity detection signal SFB input from the light intensity detection unit 500 and the reference signal SA output from the first control unit 100, and to output a comparison signal SB as a comparison result to the logic circuit 420. In addition, an amplification circuit (not shown) is provided between the light intensity detection unit 500 and the comparison circuit 410. The light intensity detection signal SFB is amplified by the amplification circuit and is then input to the comparison circuit 410. The first control unit 100 is configured to determine a gain in correspondence to the external illuminance signal SL input from the vehicle ECU 6 and to output the same to the amplification circuit, as described above.

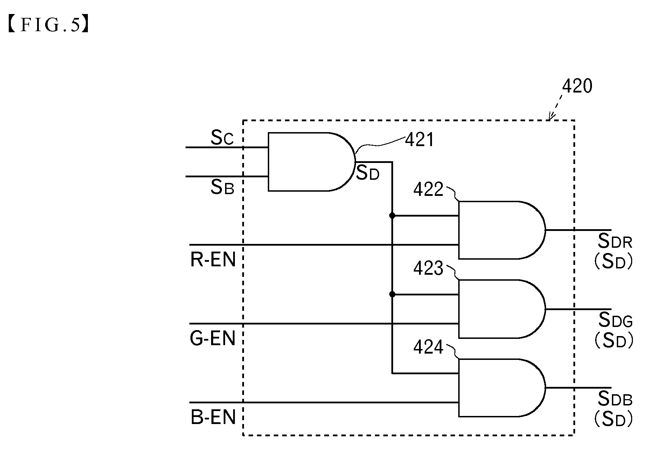

As shown in FIG. 5, the logic circuit 420 has a first AND circuit 421, a red AND circuit 422, a green AND circuit 423 and a blue AND circuit 424. The logic circuit 420 is configured to input the limit signal SC and the enable signal EN (the red enable signal R-EN, the green enable signal G-EN, the blue enable signal B-EN) from the second control unit 200 and the comparison signal SB from the comparison circuit 410 and to output a red driving signal SDR for driving the red light source 11r, a green driving signal SDG for driving the green light source 11g or a blue driving signal SDB for driving the blue light source 11b to each of the red switch unit 431, the green switch unit 432 and the blue switch unit 433 by the AND circuits.

The first AND circuit 421 is configured to output a driving signal SD, which is an AND signal of the limit signal SC from the second control unit 200 and the comparison signal SB from the comparison circuit 410, to each of the AND circuits 422, 423, 424.

The red AND circuit 422 is configured to output a red driving signal SDR, which is an AND signal of the red enable signal R-EN from the second control unit 200 and the driving signal SD from the first AND circuit 421, to the red switch unit 431. The green AND circuit 423 is also configured to output a green driving signal SDG, which is an AND signal of the green enable signal G-EN from the second control unit 200 and the driving signal SD from the first AND circuit 421, to the green switch unit 432, and the blue AND circuit 424 is also configured to output a green driving signal SDG, which is an AND signal of the green enable signal G-EN from the second control unit 200 and the driving signal SD from the first AND circuit 421, to the green switch unit 432.

The switch unit 430 is configured by a switching circuit using a FET (Field Effect Transistor) of an n-type or p-type channel. The switch unit 430 is configured to perform on/off operations in accordance with an output from the logic circuit 420.

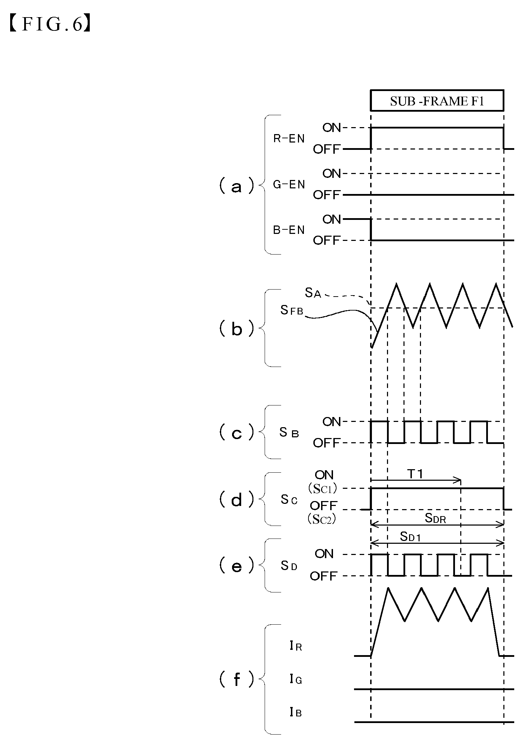

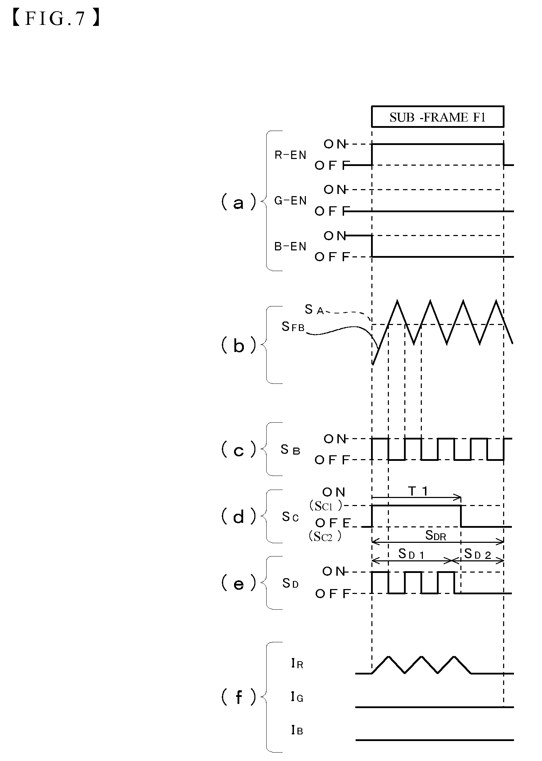

As shown in FIG. 4, the switch unit 430 has a red switch unit 431 connected to a cathode-side of the red light source 11r, a green switch unit 432 connected to a cathode-side of the green light source 11g, and a blue switch unit 433 connected to a cathode-side of the blue light source 11b. The red switch unit 431 corresponding to the red light source 11r becomes an ON state when an output of the red AND circuit 422 indicates an ON state (High). Thereby, driving current IR (refer to FIG. 6(f) or FIG. 7(f)) is supplied to the red light source 11r, so that the red light source 11r emits the red light R. The red switch unit becomes an OFF state when an output of the red AND circuit 422 indicates an OFF state (Low), so that the red light source 11r is turned off. Likewise, when the green AND circuit 423 corresponding to the green light source 11g becomes ON, the green light source 11g emits the green light G, and when the blue AND circuit 424 corresponding to the blue light source 11b becomes ON, the blue light source 11b emits the blue light B.

By the light source driving unit 400 configured as described above, the driving current is supplied to each of the light sources 11r, 11g, 11b in accordance with light emitting timings determined by the respective enable signals R, G, B-EN, as shown in FIG. 6(f) or FIG. 7(f). Thereby, the light sources 11r, 11g, 11b of different colors are sequentially turned on every predetermined period (a period for which the enable signal is ON) (the field-sequential color format). A reference numeral IR denoted in FIG. 6(f) or FIG. 7(f) indicates the driving current flowing through the light source 11r, a reference numeral IG indicates the driving current flowing through the light source 11g, and a reference numeral IB indicates the driving current flowing through the light source 11b.

The light intensity detection unit 500 is configured to receive the illumination light C emitted from the light source 11 and to detect a light intensity of each of the lights R, G, B in a time division manner. The light intensity detection unit 500 is configured to output the light intensity detection signal SFB (voltage signal) indicative of the detected luminescence intensity. As described above, according to the light source driving device 5 of this embodiment, feedback control of inputting the light intensity detection signal SFB indicative of the luminescence intensity of the light source 11 input from the light intensity detection unit 500, generating the driving signal SD (the red driving signal SDR, the green driving signal SDG, the blue driving signal SDB) from the light intensity detection signal SFB by the light source driving unit 400 and again driving the light source 11 of each color on the basis of the driving signal SD is performed to carry out monitoring control so that the light source 11 has the desired luminescence intensity.

Herein, light source driving processing that is to be executed by the light source driving device 5 will be described with reference to flow charts of FIG. 6 and FIG. 7. This processing starts when the HUD device 1 is activated, and is repeated until the HUD device 1 stops.

### (Light Source Driving Processing)

First, in step S10, the first control unit 100 of the light source driving device 5 inputs the external illuminance signal (dimming signal) SL indicative of external brightness of the vehicle 2 from the vehicle ECU 6.

Then, in step S20, the first control unit 100 reads out the reference signal SA corresponding to the input external illuminance signal SL from the memory. For example, the table data in which the intensity value indicated by the external light intensity detection signal SL and the setting value are associated with each other is stored in the memory. The first control unit 100 refers to the table data to generate a reference signal SB of the setting value corresponding to the intensity value indicated by the acquired external light intensity detection signal SL. The reference signal SA corresponding to the predetermined external illuminance signal SL is provided with a reference signal SA of a separate value for each color and is set to a value for keeping a white balance.

In step S30, the first control unit 100 compares the external illuminance signal SL and the threshold value P stored in advance in the memory. When the external illuminance signal SL is equal to or greater than the threshold value P (step S30; YES), it is assumed that the surrounding of the HUD device 1 is bright, and the first control unit 100 sets the limit signal SC having no prohibition signal SC2 (step S40a). On the other hand, when the external illuminance signal SL is less than the threshold value P (step S30; NO), it is assumed that the surrounding of the HUD device 1 is dark, and the first control unit 100 sets the limit signal SC having the prohibition signal SC2 (step S40b). The limit signal SC is data stored in advance in the memory, and is configured by the permission signal SC1 for outputting the driving signal SD (a lighting signal SD1 to be described later) corresponding to the comparison signal SB to the logic circuit 420 for a driving period T or the prohibition signal SC2 for outputting the driving signal SD (a non-lighting signal SD2 to be described later) irrelevant to the comparison signal SB to the logic circuit 420, with respect to the comparison signal SB to be input from the comparison circuit 410.

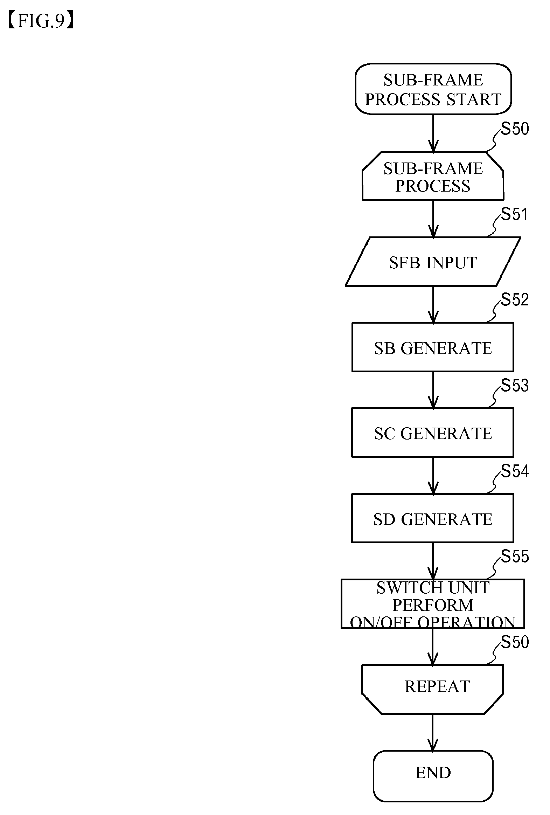

Then, in step S50, the processing proceeds to sub-frame processing, the sub-frame processing is repeated every sub-frame obtained by time-dividing one frame, and is over after one frame is over. In the meantime, even when the sub-frame processing is over, the light source driving processing returns to step S10 and is repeated until the HUD device 1 stops. In the below, the sub-frame processing S50 in the light source driving processing is described with reference to timing charts of FIG. 6 and FIG. 7 and a flow chart of FIG. 9. Meanwhile, the sub-frame processing S30 that is carried out when the limit signal SC is set to the limit signal SC having no prohibition signal SC2 is referred to as first sub-frame processing, and the sub-frame processing S30 that is carried out when the limit signal SC is set to the limit signal SC having the prohibition signal SC2 is referred to as second sub-frame processing. FIG. 6 is a timing chart for illustrating a variety of signals and driving currents in the first sub-frame processing, and FIG. 7 is a timing chart for illustrating a variety of signals and driving currents in the second sub-frame processing.

### (First Sub-frame Processing)

In the first sub-frame processing, the light intensity detection signal SFB, which is a value relating to the luminescence intensity of the light source 11, is input to the comparison circuit 410 of the light source driving device 5 from the light intensity detection unit 500 (step S51), and the comparison circuit 410 compares the light intensity detection signal SFB from the light intensity detection unit 500 and the reference signal SA from the first control unit 100 to generate the comparison signal SB (step S52). Specifically, as shown in FIG. 6(b) and FIG. 6(c), when the value indicated by the light intensity detection signal SFB is greater than the setting value indicated by the reference signal SA, the comparison circuit 410 sets the comparison signal SB to the OFF state (Low). When the comparison signal SB is set to the OFF state in this way, the driving current flowing through the light source 11 is lowered (which will be described later), so that a value indicated by the light intensity detection signal SFB, which is feedback data of the luminescence intensity of the light source 11, is lowered below the value indicated by the reference signal SA. The comparison circuit 410 sets the comparison signal SB to the ON state (High) at timing at which the value indicated by the light intensity detection signal SFB is below the value indicated by the reference signal SA. By repeating the corresponding operations, the comparison circuit 410 generates the comparison signal SB, which is a pulse signal repeating the ON and OFF states.

In step S53, the second control unit 200 generates and outputs the limit signal SC to the input terminal of the logic circuit 420. In the first sub-frame processing, the second control unit 200 outputs the permission signal SC1 (the limit signal SC having no prohibition signal SC2) indicative of the ON state (High) all the time, as determined in step S40a.

Then, in step S54, as shown in FIG. 6(c), FIG. 6(d) and FIG. 6(e), the first AND circuit 421 of the logic circuit 420 generates the driving signal SD by a logical AND of the limit signal SC (the permission signal SC1) from the second control unit 200 and the comparison signal SB from the comparison circuit 410 and outputs the same to each of the AND circuits 422, 423, 424. In the first sub-frame processing, since the first AND circuit 421 outputs the logical AND of the comparison signal SB and the permission signal SC1 indicative of the ON state (High) all the time as the driving signal SD, the driving signal SD, which is a pulse signal equivalent to the comparison signal SB, is output. Each of the AND circuits 422, 423, 424 performs an AND operation of the driving signal SD from the first AND circuit 421 and the enable signal EN from the second control unit 200 and outputs the same to the switch unit 430, as the driving signal SD (the red driving signal SDR, the green driving signal SDG or the blue driving signal SDB).

Then, the switch unit 430 performs the on/off operation in correspondence to the driving signal SD, thereby driving the light sources 11r, 11g, 11b (step S55). At this time, the driving current IR flowing through the red light source 11r, the driving current IG flowing through the green light source 11g, and the driving current IB flowing through the blue light source 11b are as shown in FIG. 6(f).

The light source driving device 5 repeats the first sub-frame processing until one frame goes through.

### (Second Sub-frame Processing)

In the second sub-frame processing, the light intensity detection signal SFB, which is a value relating to the luminescence intensity of the light source 11, is input to the comparison circuit 410 of the light source driving device 5 from the light intensity detection unit 500 (step S51), and the comparison circuit 410 compares the light intensity detection signal SFB from the light intensity detection unit 500 and the reference signal SA of the first control unit 100 to generate the comparison signal SB (step S52). Specifically, as shown in FIG. 7(b) and FIG. 7(c), when the value indicated by the light intensity detection signal SFB is greater than the setting value indicated by the reference signal SA, the comparison circuit 410 sets the comparison signal SB to the OFF state (Low).

In step S53, the second control unit 200 generates and outputs the limit signal SC to the input terminal of the logic circuit 420. In the second sub-frame processing, the second control unit 200 outputs the permission signal SC1 indicative of the ON state (High) and the prohibition signal SC2 indicative of the OFF state (Low).

Then, in step S54, as shown in FIG. 7(c), FIG. 7(d) and FIG. 7(e), the first AND circuit 421 of the logic circuit 420 generates the driving signal SD by a logical AND of the limit signal SC (the permission signal SC1 and the prohibition signal SC2) from the second control unit 200 and the comparison signal SB from the comparison circuit 410 and outputs the same to each of the AND circuits 422, 423, 424.

In the second sub-frame processing, the first AND circuit 421 outputs the logical AND of the comparison signal SB and the permission signal SC1 indicative of the ON state (High) and prohibition signal SC2 indicative of the OFF state (Low), as the driving signal SD. Therefore, when the limit signal SC is the permission signal SC1 indicative of the ON state (High), the driving signal SD (the lighting signal SD1), which is a pulse signal equivalent to the comparison signal SB, is output, and when the limit signal SC is the prohibition signal SC2 indicative of the OFF state (Low), the driving signal SD (the non-lighting signal SD2) irrelevant to the pulse signal of the comparison signal SB is output to each of the AND circuits 422, 423, 424. Each of the AND circuits 422, 423, 424 performs an AND operation of the driving signal SD from the first AND circuit 421 and the enable signal EN from the second control unit 200 and outputs the same to the switch unit 430, as the driving signal SD (the red driving signal SDR, the green driving signal SDG or the blue driving signal SDB).

In the second sub-frame processing, the limit signal SC is set ON (the permission signal SC1) only for the driving period T (T1 in FIG. 7(d)) determined for each sub-frame and is set OFF (the prohibition signal SC2) for the other period.

The second control unit 200 outputs the lighting signal SD1 to the logic circuit 420 for the predetermined driving period T upon leading edge (rising of the pulse signal) of the comparison signal SB, which is first input within each sub-frame (F1...), of the comparison signal SB, which is the pulse signal from the comparison circuit 410. The logic circuit 420 outputs the driving signal SD (the lighting signal SD1), which is the pulse signal based on the comparison signal SB, to each switch unit 430 only for the driving period T, and outputs the driving signal SD (the non-lighting signal SD2), which is not based on the pulse signal of the comparison signal SB, to each switch unit 430 for the other sub-frame period.

Then, the switch unit 430 performs the on/off operation in correspondence to the driving signal SD, thereby driving the light sources 11r, 11g, 11b (step S55). At this time, the driving current IR flowing through the red light source 11r, the driving current IG flowing through the green light source 11g, and the driving current IB flowing through the blue light source 11b are as shown in FIG. 7(f).

The light source driving device 5 repeats the first sub-frame processing until one frame goes through.

As described above, the light source driving device 5 of this embodiment is configured to acquire the light intensity detection signal SFB indicative of the intensity of the light emitted by the light source 11, the comparison circuit 410 is configured to generate the comparison signal SB indicative of ON and OFF states on the basis of the light intensity detection signal SFB and the set reference signal SA, and the logic circuit 420 is configured to output the lighting signal SD1 repeating ON and OFF states based on the pulse signal input from the comparison circuit 410 and for causing the light source 11 to emit the light in correspondence to the reference signal SA, which is the setting value, and the non-lighting signal SD2 for causing the light source 11 not to emit the light in correspondence to the setting value, within the sub-frame period. By the configuration, it is possible to automatically adjust the amount of light emitted from the light source 11 with precision on the basis of the actual light intensity of the light source 11 and to provide the non-lighting signal SD2 for causing the light source 11 not to emit the light in the sub-frame period. Therefore, it is possible to lower the amount of light emitted from the light source 11 within the sub-frame period, to generate the display image M of the low brightness, and to secure the dynamic range.

Also, when the comparison signal SB, which is the pulse signal, is input within the sub-frame period, the light source driving unit 400 starts to output the ON/OFF lighting signal SD1 based on the comparison signal SB, drives the light source 11, and continues to output the lighting signal SD1 for the predetermined driving period T.

By the above configuration, it is possible to turn on the light source 11 with the lighting signal SD1 by the predetermined period in accordance with on/off timings of the pulse signal of the comparison signal SB. Therefore, it is possible to keep the number of pulses (the lighting time) constant within the predetermined period, so that it is possible to suppress the unevenness of the amount of light emitted from the light source 11 within the sub-frame.

The disclosure is not limited to the above embodiment and the drawings. It is possible to appropriately change (including the deletion of the constitutional element) the embodiment and drawings without departing from the gist of the disclosure. In the below, modified embodiments will be described.

### (Second Embodiment)

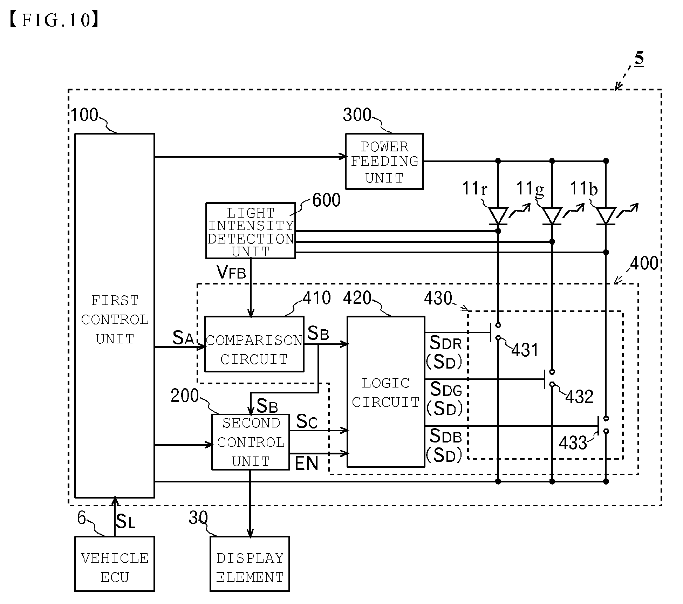

In the above embodiment, the light source driving device 5 is configured to input the light intensity detection signal SFB from the light intensity detection unit 500 to the comparison circuit 410, as the feedback signal, and the comparison circuit 410 is configured to compare the light intensity detection signal SFB from the light intensity detection unit 500 and the reference signal SA from the first control unit 100 to generate the comparison signal SB, which is the pulse signal. The light source driving device 5 of a second embodiment is different from the above embodiment, in that the light source driving device 5 is configured to detect the driving current Ir, Ig, Ib flowing through the light source 11 by a current detection unit 600, to calculate a voltage value from the driving current and to output a signal VFB relating to the voltage value to the comparison circuit 410, as the feedback signal, as shown in FIG. 10.

In the second embodiment, the comparison circuit 410 is configured to compare the voltage signal VFB input from the current detection unit 600 and the reference signal SA output from the first control unit 100 and to output a comparison signal SB indicative of a comparison result to the logic circuit 420.

In this way, even when the pulse signal is generated from the voltage signal VFB based on the driving current Ir, Ig, Ib of the light source 11 according to the second embodiment, it is possible to accomplish the same effects as the above embodiment. In the meantime, the position at which the current detection unit 600 detects the current is not limited to the position shown in FIG. 10. For example, the current of a side of the switch unit 430, which is not connected to the light source 11, may be detected.

### (Third Embodiment)

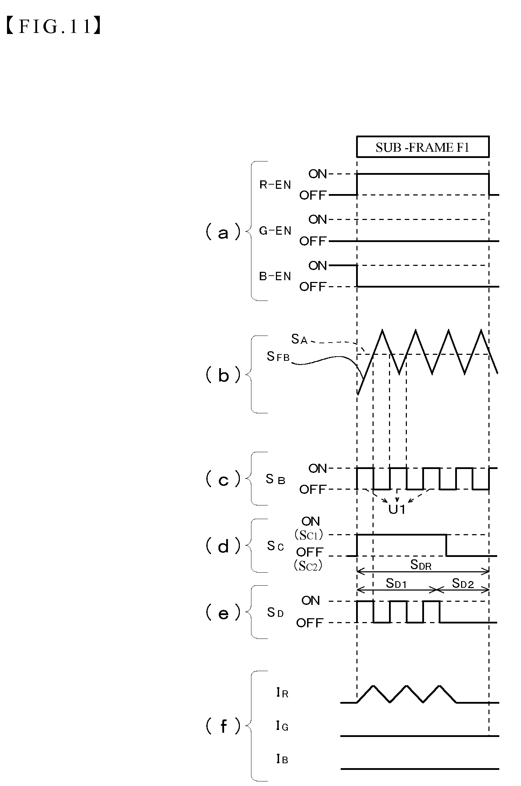

In the above embodiment, the light source driving unit 400 is configured to output the lighting signal SD1 for the driving period T preset for each sub-frame. The light source driving device 5 of a third embodiment is different from the above embodiment, in that the light source driving device 5 is configured to output the lighting signal SD1 by the number of pulses U preset for each sub-frame. Specifically, the switching timing of the permission signal SC1 (the prohibition signal SC2) that is to be output to the logic circuit 420 by the second control unit 200 is different. The switching operation of the permission signal SC1 (the prohibition signal SC2) that is to be performed by the second control unit 200 according to the third embodiment is described with reference to a timing chart of FIG. 11.

The second control unit 200 is configured to input the comparison signal SB from the comparison circuit 410 and to output the limit signal SC (the permission signal SC1 or the prohibition signal SC2) to the logic circuit 420 so that the lighting signal is output by the number of pulses U (U1 in FIG. 11) preset for each sub-frame. Specifically, the second control unit 200 is configured to start a counting of the number of pulses upon the leading edge (rising of the pulse signal) of the comparison signal SB, which is first input within each sub-frame (F1...), and to output the permission signal SC1 to the logic circuit 420 so that the lighting signal is output by the preset number of pulses U from the logic circuit 420. The logic circuit 420 is configured to output the driving signal SD (the lighting signal SD1), which is the pulse signal based on the comparison signal SB, to each switch unit 430 by the preset number of pulses U, and to output the driving signal SD (the non-lighting signal SD2), which is not based on the pulse signal of the comparison signal SB, to each switch unit 430 in the other sub-frame period.

### (Fourth Embodiment)

In the above embodiment, the second control unit 200 is configured to determine whether or not the non-lighting signal SD2 (the prohibition signal SC2) in the limit signal SC, based on the value of the external illuminance signal SL. In a fourth embodiment, the second control unit 200 is configured to control an occupying ratio of the prohibition signal SC2 in each sub-frame period, based on the value of the external illuminance signal SL. FIG. 12(a) to FIG. 12(c) are timing charts depicting changes in the driving period T, based on the value of the external illuminance signal SL. FIG. 12(a) depicts the enable signal EN, and FIG. 12(b) and FIG. 12(c) depict the limit signals SC when the external illuminance signals SL are different. In the meantime, FIG. 12 (b) depicts a case where the external illuminance signal SL is large (the dimming value is large), and FIG. 12(c) depicts a case where the external illuminance signal SL is small (the dimming value is small). Specifically, for example, the second control unit 200 of the fourth embodiment is configured to decrease the occupying ratio of the non-lighting signal SD2 in each sub-frame period as the external illuminance signal (the dimming signal) SL increases, and to increase the occupying ratio of the non-lighting signal SD2 in each sub-frame period as the external illuminance signal (the dimming signal) SL decreases. In the meantime, the period t(t1, t2, t3) of each sub-frame F and the driving period T are proportional to each other, i.e., t1:t2:t3=T11:T12:T13=T21:T22:T23. By this configuration, it is possible to easily adjust the amount of light emitted from the light source 11, in correspondence to the external illuminance signal (the dimming signal) SL. Also, since the driving period T set for each sub-frame F is proportional to the length of the sub-frame F period, it is possible to keep a ratio of the amounts of the lights emitted from the respective light sources 11 every the sub-frame F constant and to easily control the dimming of the light source 11 while keeping the white balance.

In the above embodiment, the second control unit 200 is configured to control whether or not to increase/decrease the non-lighting signal SD2 (the prohibition signal SC2), based on the value of the external illuminance signal SL. However, the disclosure is not limited thereto. For example, the second control unit may be configured to measure a temperature of the display element 30 and increase the occupying ratio of the non-lighting signal SD2 in each sub-frame period when the temperature is higher than a preset threshold value. In this way, it is possible to increase the occupying ratio of the prohibition signal SC2 in each sub-frame period through the simple control by the signal from the second control unit 200, thereby easily lowering the luminescence intensity of the light source 11 and suppressing the increase in the temperature of the display element 30 due to the illumination light C of the light source 11 to prevent a failure of the display element 30. Also, the driving current Ir, Ig, Ib of the light source 11 may be monitored, and when the driving current Ir, Ig, Ib becomes over-current, the occupying ratio of the prohibition signal SD2 in each sub-frame period may be increased. In this way, it is possible to increase the non-lighting signal SD2 through the simple control by the signal from the second control unit 200, thereby easily lowering the luminescence intensity of the light source 11.

Also, the switch unit 430 may be provided outside the LSI having the comparison circuit 410 and the logic circuit 420. In this way, the switch unit 430 is provided independently of the LSI having the comparison circuit 410 and the logic circuit 420, so that it is possible to suppress heat generated from the switch unit 430 from being transferred to the comparison circuit 410 and the logic circuit 420 and to suppress malfunctions or failures of the comparison circuit 410 and the logic circuit 420.

In the above embodiment, the light sources 11r, 11g, 11b of respective colors are configured as one lamp, respectively. However, the light sources 11r, 11g, 11b of respective colors may be arranged in plural in parallel or in series with the red switch unit 431, the green switch unit 432 and the blue switch unit 433. In addition, the light sources 11r, 11g, 11b of respective colors may be provided in plural and the red switch unit 431, the green switch unit 432 and the blue switch unit 433 configured to drive the same may also be provided in plural.

In the above embodiment, the power feeding unit 300 is configured to control the voltage to be applied under control of the first control unit 100. However, the disclosure is not limited thereto. For example, a constant voltage circuit configured to apply a constant voltage to the light source 11 may also be adopted.

In the above embodiment, the limit signal SC that is to be output to the logic circuit 420 by the second control unit 200 is kept at the ON state (High) until the driving period T (or the predetermined number of pulses U) is over. However, the disclosure is not limited thereto. For example, the limit signal SC may be a pulse signal synchronous with ON and OFF states of the comparison signal SB until the driving period T (or the predetermined number of pulses U) is over.

As a peripheral circuit to be connected to the light source 11, an inductor, a resistor and the like may be appropriately connected, in addition to the power feeding unit 300 and the switch unit 430 of the above embodiment. The rising/falling of the driving currents Ir, Ig, Ib flowing through the light source 11 becomes different due to impedances of the peripheral circuits. That is, since the light emission time (the amount of light to be emitted) of the light source 11 becomes different due to the impedances of the peripheral circuits of the light source 11, the occupying ratio of the prohibition signal SC2 (the non-lighting signal SD2) in each sub-frame period is preferably set appropriately by impedance of the wiring for driving the light source 11.

In the above embodiment, the second control unit 200 is configured to output the lighting signal SD1 to the logic circuit 420 by the predetermined driving period T (or the predetermined number of pulses U) upon the leading edge (the rising of the pulse signal) of the comparison signal SB, which is first input within each sub-frame (F1...), of the comparison signal SB, which is the pulse signal input from the comparison circuit 410. However, the output of the lighting signal SD1 to the logic circuit 420 may be initiated upon the rising of the second pulse signal or thereafter of the comparison signal SB input within each sub-frame (F1...).

A lights-out period within which any light source 11 is not turned on may be provided between the respective sub-frames. By this configuration, even when the light intensity detection unit 500, the comparison circuit 410 and the logic circuit 420 are commonly provided for the light source 11 of plural colors, it is possible to prevent a false operation of the light source 11 due to the input of the light intensity detection signal SFB of different color from the light intensity detection unit 500 to the light source driving unit 400 at a boundary of the sub-frames.

Also, the second control unit 200 may be configured to set the limit signal SC to the prohibition signal SC2 between the respective sub-frames. Also in this configuration, it is possible to provide a lights-out period within which any light source 11 is not turned on between the respective sub-frames and to prevent the false operation of the light source 11.

In the above embodiment, the external illuminance signal SL that is to be input from the vehicle ECU 6 is used as the dimming signal for the dimming of the light source 11. However, the disclosure is not limited thereto. For example, the HUD device 1 may be provided with an illuminance sensor configured to acquire the external light intensity, and a signal from the illuminance sensor provided for the HUD device 1 may be used as the dimming signal for the dimming of the light source 11. Also, the observer 4 may operate an operation unit (not shown) provided for the HUD device 1 or the vehicle 2 for the dimming. Also, the dimming signal may be generated in correspondence to a switch operation of turning on or off a lamp of the vehicle 2.

In the above descriptions, the well-known technical configurations, which are not important, have been appropriately omitted so as to easily understand the disclosure.

### Industrial Applicability

The light source driving device and the display device of the disclosure are suitable for a display device that is to be used outside, and can be applied to a head up display or the like to be mounted on the vehicle.

### Reference Signs List

- 1:: HUD device (display device)
- 2:: vehicle
- 3:: wind shield
- 4:: observer
- 5:: light source driving device
- 10:: illumination device
- 11:: light source
- 20:: illumination optical system
- 30:: display element
- 40:: projection optical system
- 50:: screen
- 61:: plane mirror
- 62:: concave mirror
- 70:: housing
- 100:: first control unit
- 200:: second control unit
- 300:: power feeding unit
- 400:: light source driving unit
- 410:: comparison circuit (control signal output unit)
- 420:: logic circuit (control signal output unit)
- 430:: switch unit (driving unit)
- 500:: light intensity detection unit
- 600:: current detection unit
- SA:: reference signal (setting value)
- SB:: comparison signal
- SC:: limit signal
- SC1:: permission signal
- SC2:: prohibition signal
- SD:: driving signal
- SD1:: lighting signal

- SD2:: non-lighting signal
- SFB:: light intensity detection signal (light intensity)
- SL:: external illuminance signal (dimming signal)
- EN:: enable signal

## Claims

1. A light source driving device comprising:
a control signal output unit configured to acquire a light intensity indicative of an intensity of light emitted by a light source, to generate a pulse signal indicative of ON and OFF states on the basis of the light intensity and a set setting value and to output the same as a driving signal; and
a driving unit that drives the light source when the driving signal output from the control signal output unit indicates any one of ON and OFF states,
wherein the light source is configured to emit light of a different color every predetermined sub-frame, and wherein the control signal output unit is configured to output a lighting signal repeating ON and OFF states based on the pulse signal and for causing the light source to emit the light in correspondence to the setting value and a non-lighting signal for causing the light source not to emit the light in correspondence to the setting value to the driving unit, as the driving signal, within the sub-frame period, and to output the lighting signal in a lighting period preset for each sub-frame.

2. The light source driving device according to claim 1, wherein the control signal output unit is configured to output the lighting signal upon an input of the pulse signal within the sub-frame, which is a start momentum of the lighting period.

3. The light source driving device according to claim 1 or 2, wherein the control signal output unit is configured to acquire information indicative of an external light intensity and to set the setting value on the basis of the external light intensity.

4. The light source driving device according to any one of claims 1 to 3, wherein the control signal output unit prolongs the lighting period within the sub-frame period when the external light intensity is greater than a predetermined threshold value.

5. A light source driving device comprising:
a control signal output unit configured to acquire driving current of a light source, to generate a pulse signal indicative of ON and OFF states on the basis of a value based on the driving current and a set target value and to output the same as a driving signal; and
a driving unit that drives the light source when the driving signal output from the control signal output unit indicates any one of ON and OFF states,
wherein the light source is configured to emit light of a different color every predetermined sub-frame, and
wherein the control signal output unit is configured to output a lighting signal repeating ON and OFF states based on the pulse signal and for causing the light source to emit the light in correspondence to the setting value and a non-lighting signal for causing the light source not to emit the light in correspondence to the setting value to the driving unit, as the driving signal, within the sub-frame period, and to output the lighting signal in a lighting period preset for each sub-frame.

6. The light source driving device according to claim 5, wherein the control signal output unit is configured to output the lighting signal upon an input of the pulse signal within the sub-frame, which is a start momentum of the lighting period.

7. The light source driving device according to claim 5 or 6, wherein the control signal output unit is configured to acquire information indicative of an external light intensity and to set the setting value on the basis of the external light intensity.

8. The light source driving device according to any one of claims 5 to 7, wherein the control signal output unit prolongs the lighting period within the sub-frame period when the external light intensity is greater than a predetermined threshold value.

9. A light source driving device comprising:
a control signal output unit configured to acquire a light intensity indicative of an intensity of light emitted by a light source, to generate a pulse signal indicative of ON and OFF states on the basis of the light intensity and a set setting value and to output the same as a driving signal; and
a driving unit that drives the light source when the driving signal output from the control signal output unit indicates any one of ON and OFF states,
wherein the light source is configured to emit light of a different color every predetermined sub-frame, and
wherein the control signal output unit is configured to output a lighting signal repeating ON and OFF states based on the pulse signal and for causing the light source to emit the light in correspondence to the setting value and a non-lighting signal for causing the light source not to emit the light in correspondence to the setting value to the driving unit, as the driving signal, within the sub-frame period, and to output the lighting signal by the number of pulses preset for each sub-frame.

10. The light source driving device according to claim 9, wherein the control signal output unit is configured to acquire information indicative of an external light intensity and to set the setting value on the basis of the external light intensity.

11. The light source driving device according to claim 9 or 10, wherein the control signal output unit increases the number of pulses by which the lighting signal is to be output, when the external light intensity is greater than a predetermined threshold value.

12. A light source driving device comprising:
a control signal output unit configured to acquire driving current of a light source, to generate a pulse signal indicative of ON and OFF states on the basis of a value of the driving current and a set target value and to output the same as a driving signal; and
a driving unit that drives the light source when the driving signal output from the control signal output unit indicates any one of ON and OFF states,
wherein the light source is configured to emit light of a different color every predetermined sub-frame, and
wherein the control signal output unit is configured to output a lighting signal repeating ON and OFF states based on the pulse signal and for causing the light source to emit the light in correspondence to the setting value and a non-lighting signal for causing the light source not to emit the light in correspondence to the setting value to the driving unit, as the driving signal, within the sub-frame period, and to output the lighting signal by the number of pulses preset for each sub-frame.

13. The light source driving device according to claim 12, wherein the control signal output unit is configured to acquire information indicative of an external light intensity and to set the setting value on the basis of the external light intensity.

14. The light source driving device according to claim 12 or 13, wherein the control signal output unit increases the number of pulses by which the lighting signal is to be output, when the external light intensity is greater than a predetermined threshold value.

15. A display device comprising:
the light source driving device according to any one of claims 1 to 14;
a light source configured to emit light by the light source driving device; and
a display element configured to modulate the light from the light source, thereby generating an image.
